# EUROPEAN PATENT APPLICATION

(11) **EP 4 105 859 A1**
(43) Date of publication of application: **21.12.2022**
(21) Application number: 21754347.9
(22) Date of filing: 19.01.2021
(51) Int. Cl.: G06Q 10/06, G06F 8/10

(54) **RISK ASSESSMENT SYSTEM AND RISK ASSESSMENT METHOD**

(30) Priority: 12.02.2020 JP 2020021647
(71) Applicant: Hitachi, Ltd., Tokyo 100-8280 (JP)
(72) Inventor: OSHIMA, Kosuke, Tokyo 100-8280 (JP); KAWAKAMI, Masumi, Tokyo 100-8280 (JP); KITAGAWA, Kenji, Tokyo 100-8280 (JP); ICHII, Makoto, Tokyo 100-8280 (JP); HORI, Akihiro, Tokyo 100-8280 (JP); WU, Yuhao, Tokyo 100-8280 (JP)
(74) Representative: Mewburn Ellis LLP
(86) International application number: PCT/JP2021/001703
(87) International publication number: WO 2021/161739

(57) **Abstract**

A risk evaluation system includes a processor unit and a storage unit. In the risk evaluation system, the storage unit stores: demand information indicating a demand for software to be developed in a software development project that is a risk evaluation target; past demand information indicating a demand for software developed in a past software development project; and a source code change history in the past software development project, and the processor unit is configured to: calculate a similarity between the demand information and the past demand information; extract a change history of a source code corresponding to the past demand information based on the past demand information and the source code change history; and evaluate a risk in software development for realizing the demand information based on the similarity and the change history of the source code corresponding to the past demand information.

## Description

### Incorporation by Reference

This application claims priority to Japanese Patent Application No. 2020-21647 filed on February 12, 2020, the contents of which are incorporated herein by reference.

### Technical Field

The present invention relates to a technique for evaluating a requirement risk in software development.

### Background Art

Requirements in software development are to be satisfied by software to be developed, and are defined by a developer of the software. In a waterfall model software development process, requirements are defined at the start of development. However, at that point, even the developer may be unable to fully understand what the software is to satisfy. This causes problems such as ambiguity and inaccuracy of the requirements, and such a problem may be discovered only when design, programming, or test progresses. At this time, it is necessary to redo the design, programming, or test, but it is difficult to add development personnel as a deadline approaches, resulting in missing the development deadline. In such a situation, if the problems related to the requirements can be early detected, it is possible to review the requirements and secure the development personnel. Therefore, evaluation of a risk in a software development project based on a requirement is desired.

As a method of evaluating the risk in a software development project, PTL 1 proposes a risk evaluation system that objectively evaluates a risk latent in a plan of a project at a planning stage of the project.

### Citation List

### Patent Literature

PTL 1: JP H11-66150 A

### Summary of Invention

### Technical Problem

PTL 1 proposes a system that refers to information on a past project similar to a planned project and evaluates a risk of the planned project from experience of the past project. However, this system evaluates the risk on a project basis, and thus is unable to detect a problem related to an individual requirement. An object of the present invention is to evaluate a risk associated with an individual requirement in order to review the requirement and secure software development personnel having specialized knowledge about the requirement.

### Solution to Problem

In order to solve at least one of the above problems, the present invention is a risk evaluation system including a processor unit and a storage unit, wherein the storage unit stores: demand information indicating a demand for software to be developed in a software development project that is a risk evaluation target; past demand information indicating a demand for software developed in a past software development project; and a source code change history in the past software development project, and the processor unit is configured to: calculate a similarity indicating a resemblance between the demand information and the past demand information; extract a change history of a source code corresponding to the past demand information based on the past demand information and the source code change history; and evaluate a risk in software development for realizing the demand information based on the similarity and the change history of the source code corresponding to the past demand information.

### Advantageous Effects of Invention

According to an aspect of the present invention, it is possible to provide a requirement risk evaluation system that evaluates a risk in satisfying a requirement in a software development project. Problems, configurations, and advantageous effects other than those described above will be clarified by the following description of embodiments.

### Brief Description of Drawings

[FIG. 1] FIG. 1 is a block diagram illustrating a hardware configuration of a requirement risk evaluation system according to a first embodiment of the present invention.
[FIG. 2] FIG. 2 is a block diagram illustrating functions of the requirement risk evaluation system according to the first embodiment of the present invention.
[FIG. 3] FIG. 3 is an explanatory diagram illustrating an example of requirement information held by the requirement risk evaluation system according to the first embodiment of the present invention.
[FIG. 4] FIG. 4 is an explanatory diagram illustrating an example of past requirement information held by the requirement risk evaluation system according to the first embodiment of the present invention.
[FIG. 5] FIG. 5 is an explanatory diagram illustrating an example of requirement-source code correspondence information held by the requirement risk evaluation system according to the first embodiment of the present invention.
[FIG. 6] FIG. 6 is an explanatory diagram illustrating an example of source code change information held by the requirement risk evaluation system according to the first embodiment of the present invention.
[FIG. 7] FIG. 7 is a flowchart illustrating usage of the requirement risk evaluation system according to the first embodiment of the present invention.
[FIG. 8] FIG. 8 is an explanatory diagram illustrating an example of a requirement information input screen displayed by the requirement risk evaluation system according to the first embodiment of the present invention.
[FIG. 9] FIG. 9 is a flowchart illustrating risk evaluation processing performed by the requirement risk evaluation system according to the first embodiment of the present invention.
[FIG. 10] FIG. 10 is a block diagram illustrating functions of a requirement risk evaluation system according to a second embodiment of the present invention.
[FIG. 11] FIG. 11 is an explanatory diagram illustrating an example of project information held by the requirement risk evaluation system according to the second embodiment of the present invention.
[FIG. 12] FIG. 12 is an explanatory diagram illustrating an example of source code change information held by the requirement risk evaluation system according to the second embodiment of the present invention.
[FIG. 13] FIG. 13 is a flowchart illustrating risk evaluation processing performed by the requirement risk evaluation system according to the second embodiment of the present invention.

### Description of Embodiments

Embodiments will be described with reference to the drawings. Note that the embodiments described below do not limit the invention according to the claims, and not all of elements and combinations thereof described in the embodiments are essential for the solution provided by the invention.

### First embodiment

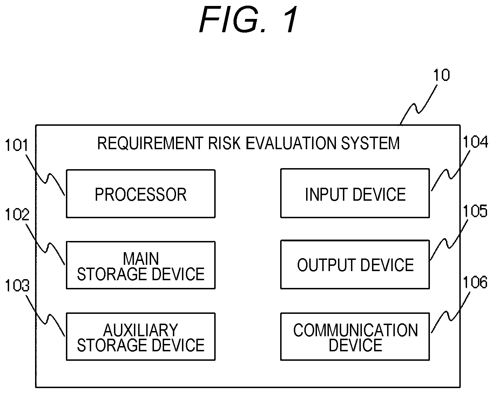

FIG. 1 is a block diagram illustrating a hardware configuration of a requirement risk evaluation system according to a first embodiment of the present invention.

As illustrated in FIG. 1, the requirement risk evaluation system 10 includes a processor 101, a main storage device 102, an auxiliary storage device 103, an input device 104, an output device 105, and a communication device 106.

The processor 101 is configured using, for example, a central processing unit (CPU) or a micro processing unit (MPU) . The main storage device 102 is a device that stores programs and data, such as a read only memory (ROM) , a random access memory (RAM), and a non-volatile RAM (NVRAM). The processor 101 and the main storage device 102 constitute an information processing device. The processor 101 reads and executes a program stored in the main storage device 102 to implement various functions of the requirement risk evaluation system 10. The auxiliary storage device 103 is, for example, a solid state drive (SSD), a hard disk drive, an optical storage device, a reading/writing device for a recording medium, or the like. Programs and data stored in the auxiliary storage device 103 are loaded into the main storage device 102 as needed.

The input device 104 is a device that acquires information from a user, such as a keyboard, a mouse, and a touch panel. The output device 105 is a device that provides information to the user, such as a liquid crystal monitor, a liquid crystal display (LCD), a graphic card, and a speaker. The communication device 106 is a wired or wireless communication interface that realizes communication with another device via a communication means such as a LAN or the Internet. Examples of the communication device 106 include a network interface card (NIC), a wireless communication module, a universal serial interface (USB) module, a serial communication module, and the like.

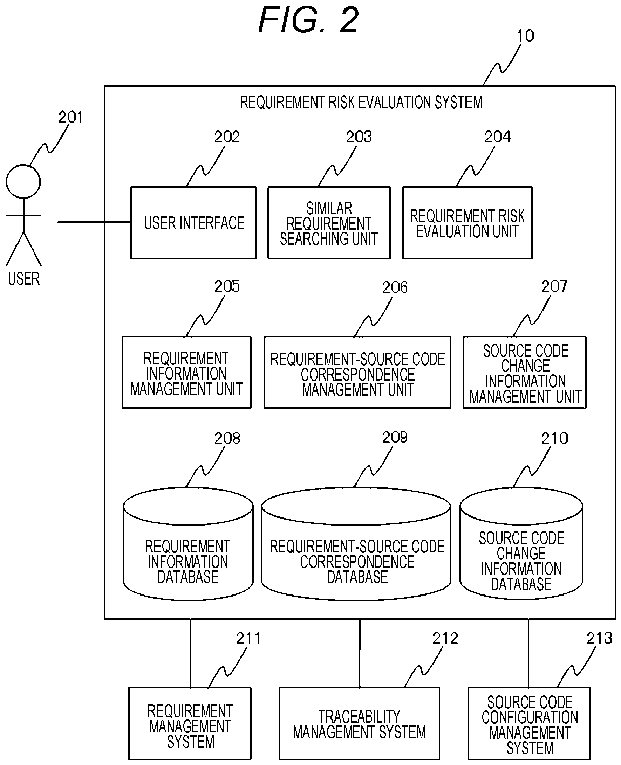

FIG. 2 is a block diagram illustrating the functions of the requirement risk evaluation system according to the first embodiment of the present invention.

A user interface 202 receives requirement information input from the user 201, and displays a risk associated with an input requirement calculated by a requirement risk evaluation unit 204.

A similar requirement searching unit 203 searches for a piece of past requirement information similar to the requirement on the basis of the requirement information input by the user 201 to the user interface 202 and past requirement information acquired from a requirement information management unit 205.

The requirement risk evaluation unit 204 evaluates the risk in software development associated with the requirement information on the basis of the requirement information input by the user 201 to the user interface 202, the piece of past requirement information retrieved by the similar requirement searching unit 203, and source code change information managed by a source code change information management unit 207.

The requirement information management unit 205 collects the past requirement information from a requirement management system 211 and stores the collected past requirement information in a requirement information database 208. The requirement management system 211 is a system that records a requirement in a software development project.

A requirement-source code correspondence management unit 206 collects requirement-source code correspondence information from a traceability management system 212 and stores the collected requirement-source code correspondence information in a requirement-source code correspondence database 209. In addition, the requirement-source code correspondence management unit 206 receives an input of a piece of past requirement information, and provides source code information on software developed to satisfy the input piece of past requirement information. The traceability management system 212 is a system that manages a correspondence among a requirement, a software specification, and a source code, recorded by a developer of a past software development project.

The source code change information management unit 207 collects the source code change information from a source code configuration management system 213, stores the collected source code change information in a source code change information database 210, and outputs the source code change information in response to a request from the requirement risk evaluation unit 204. In the source code configuration management system 213, a software developer registers a change file, a change date and time, a comment, and a changer name for each change made to a source code. The source code configuration management system 213 is a system that allows for reference to a history of the changes to the source code.

The functions of the user interface 202, the similar requirement searching unit 203, the requirement risk evaluation unit 204, the requirement information management unit 205, the requirement-source code correspondence management unit 206, and the source code change information management unit 207 are implemented by the processor 101 controlling the units of the requirement risk evaluation system 10 as necessary according to a program stored in the main storage device 102. That is, following processing executed by the units described above is actually executed by the processor 101. In addition, the requirement information database 208, the requirement-source code correspondence database 209, and the source code change information database 210 are stored in the main storage device 102 or the auxiliary storage device 103.

The requirement management system 211, the traceability management system 212, and the source code configuration management system 213 are each connected to the requirement risk evaluation system 10. In the example of FIG. 2, the requirement risk evaluation system 10, the requirement management system 211, the traceability management system 212, and the source code configuration management system 213 are illustrated as independent systems. However, such a configuration is an example, and functions of any two or more of them may be implemented by one computer system.

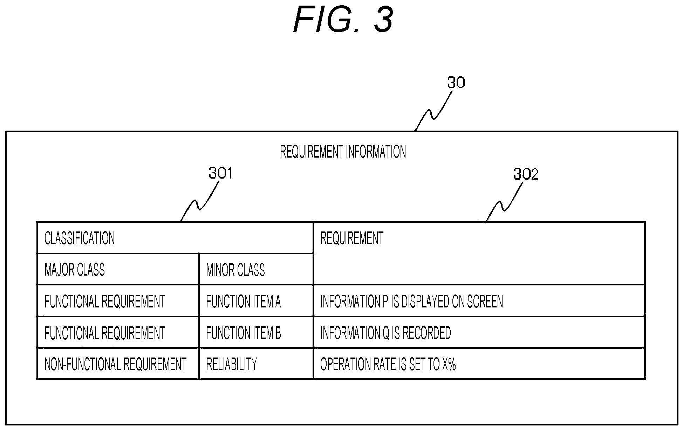

FIG. 3 is an explanatory diagram illustrating an example of requirement information held by the requirement risk evaluation system according to the first embodiment of the present invention.

The requirement information 30 includes classification 301 and requirement 302. The classification 301 is based on requirement characteristics. In FIG. 3, the classification 301 includes a major class and a minor class as constituents, but may have another constituent. The requirement 302 includes a text indicating details of a requirement of software to be developed.

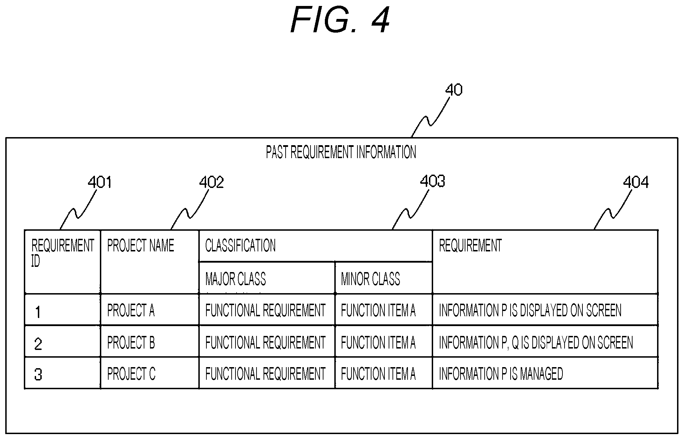

FIG. 4 is an explanatory diagram illustrating an example of past requirement information held by the requirement risk evaluation system according to the first embodiment of the present invention.

The past requirement information 40 includes requirement ID 401, project name 402, classification 403, and requirement 404. The requirement ID 401 is information that uniquely identifies a piece of past requirement information. The project name 402 is a name that uniquely identifies a project. The classification 403 and the requirement 404 are information similar to the classification 301 and the requirement 302, respectively.

The requirement information 30 illustrated in FIG. 3 is information regarding the requirement of the software to be developed this time. On the other hand, the past requirement information 40 is information regarding software developed in a project executed in the past. The requirement information 30 and the past requirement information 40 are stored in the requirement information database 208.

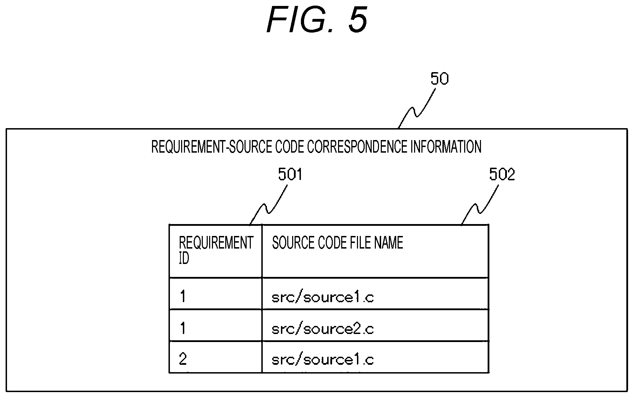

FIG. 5 is an explanatory diagram illustrating an example of requirement-source code correspondence information held by the requirement risk evaluation system according to the first embodiment of the present invention.

The requirement-source code correspondence information 50 includes requirement ID 501 and source code file name 502. The requirement ID 501 is an ID that uniquely identifies a requirement, and is the same as the requirement ID 401 of the past requirement information 40. The source code file name 502 is a name that uniquely identifies a source code file. The requirement-source code correspondence information 50 indicates that a requirement of a piece of past requirement information identified by the requirement ID 501 is realized by a source code identified by the source code file name 502.

The requirement-source code correspondence information 50 is derived from traceability information held by the traceability management system 212. The traceability information indicates a correspondence between a requirement and a software specification and a correspondence between the software specification and a source code. The traceability information is recorded at the time of development in order to check whether the requirement is reflected in the software specification and the source code in the software development. Using this information, the requirement-source code correspondence information 50 of a past project is derived.

Here, one requirement may be realized by a plurality of source codes. At this time, a plurality of values of the source code file name 502 correspond to one value of the requirement ID 501.

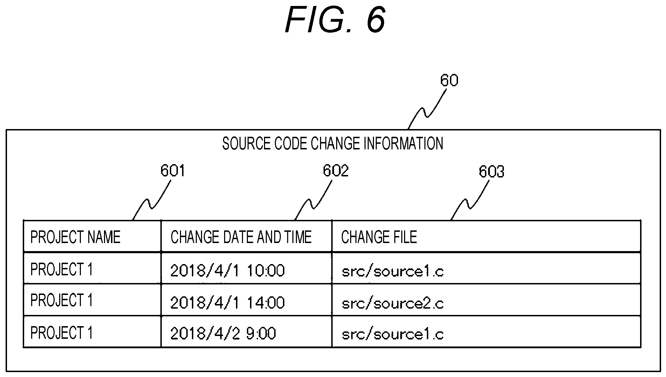

FIG. 6 is an explanatory diagram illustrating an example of source code change information held by the requirement risk evaluation system according to the first embodiment of the present invention.

The source code change information 60 includes project name 601, change date and time 602, and change file 603. The project name 601 is a name that uniquely identifies a project. The change date and time 602 is a date and time when a source code is changed. The change file 603 is a file name of the changed source code.

The source code change information 60 may be indirectly derived on the basis of information managed by the source code configuration management system 213. For example, when the source code configuration management system 213 performs management for each repository, the source code change information management unit 207 may identifies a project name on the basis of a correspondence between a repository name and a project name.

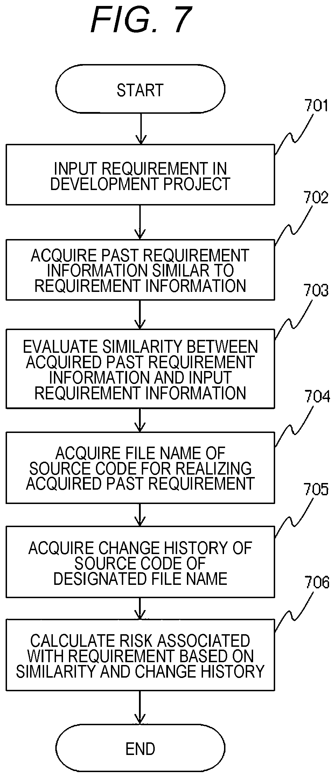

FIG. 7 is a flowchart illustrating usage of the requirement risk evaluation system according to the first embodiment of the present invention. The operation based on the flowchart of FIG. 7 is as follows.

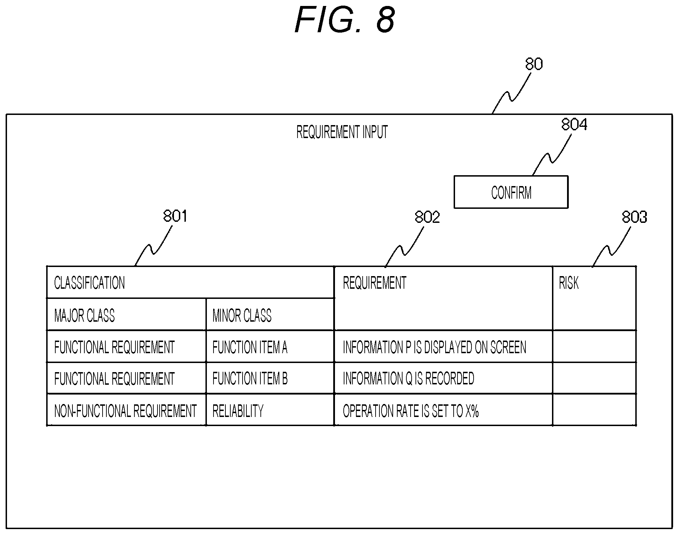

Step 701: The user 201 inputs, to the user interface 202, requirement information of a requirement to be satisfied in a software development project. An example of the condition input at this time will be described later (see FIG. 8).

Step 702: The similar requirement searching unit 203 searches for and acquires a piece of past requirement information similar to the requirement information input in step 701 from the requirement information management unit 205. For example, when the classification 403 of the past requirement information 40 includes the same item as the classification 301 of the requirement information 30, a corresponding piece of the past requirement information 40 is acquired as the piece of past requirement information.

Step 703: The similar requirement searching unit 203 evaluates a similarity between each piece of the past requirement information 40 acquired in step 702 and the requirement information input in step 701. For example, the number of sets of the same items in the classification 301 of the requirement information and the classification 403 of the past requirement information 40 is evaluated as the similarity.

Step 704: The requirement risk evaluation unit 204 acquires a file name of a source code for satisfying each piece of the past requirement information 40 acquired in step 702 from the requirement-source code correspondence management unit 206.

Step 705: The requirement risk evaluation unit 204 inputs the source code file name acquired in step 704 to the source code change information management unit 207, and acquires a change history of the source code identified by the source code file name.

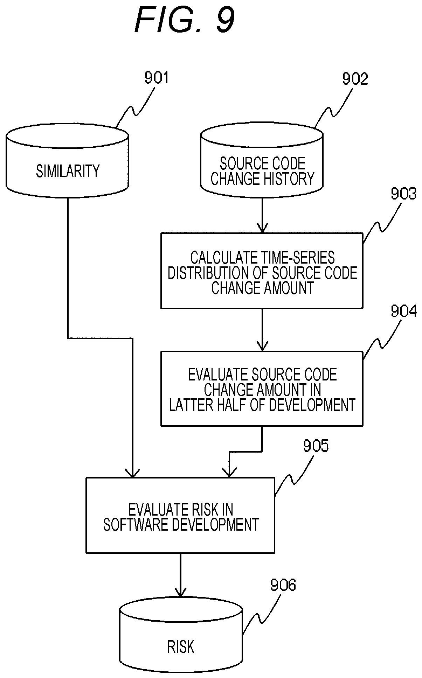

Step 706: The requirement risk evaluation unit 204 calculates a risk in software development for each requirement in the requirement information input by the user 201 in step 701 on the basis of the similarity evaluated in step 703 and the change history of the source code acquired in step 705, and outputs a result thereof. Details of the risk calculation at this time will be described later (see FIG. 9).

FIG. 8 is an explanatory diagram illustrating an example of a requirement information input screen displayed by the requirement risk evaluation system according to the first embodiment of the present invention. The requirement information input screen is displayed on the user interface 202 in step 701 in FIG. 7.

The requirement information input screen 80 includes a classification input section 801, a requirement input section 802, a risk display section 803, and a confirmation button 804.

The classification input section 801 receives an input regarding requirement classification selected from a list given in advance to the system. Constituents of the list include, as the major class, a functional requirement class and a non-functional requirement class, and include, as the minor class, classes related to functions and classes related to non-functional requirement such as reliability and maintainability.

The requirement input section 802 receives a requirement input in text.

When the user presses the confirmation button 804, the process of step 702 starts.

The risk display section 803 displays the risk output by the process of step 706.

FIG. 9 is a flowchart illustrating risk evaluation processing performed by the requirement risk evaluation system according to the first embodiment of the present invention. Specifically, the flowchart indicates a data flow when the requirement risk evaluation unit 204 evaluates the risk in step 706.

In a process 903, the requirement risk evaluation unit 204 calculates time-series distribution of a source code change amount on the basis of a source code change history 902. The time-series distribution of the source code change amount is represented by, for example, a set of a date and the number of source code lines changed by the date.

In a process 904, the requirement risk evaluation unit 204 evaluates the source code change amount in the latter half of development from the time-series distribution of the source code change amount calculated in the process 903. The evaluation method includes, for example, setting a period between a first date of the source code change and a last date of the source code change as a development period, defining a period of the development period after a lapse of a predetermined ratio of the development period as the latter half of development, and calculating the source code change amount within the period of the latter half of development. Here, the predetermined ratio is not limited to 50%, and may be arbitrarily set, for example, to 70%. Thus, the "latter half" may be read as a "late stage".

In a process 905, the requirement risk evaluation unit 204 calculates the risk in software development on the basis of the similarity between the requirement information and the past requirement information and the source code change amount in the latter half of development calculated in the process 904. The risk is calculated such that, for example, the risk is high when a value of (similarity) × (source code change amount in the latter half of development) is a predetermined value or more.

In this case, the higher the similarity and the larger the source code change amount in the latter half of development, the higher the risk is evaluated. This is because it is estimated that, as the timing of the source code change is closer to the end of the development period, the source code change is more likely to cause an undesirable result such as a development delay, need for additional development personnel, and a development cost increase. Furthermore, it is estimated that, as the similarity between the requirement in which the source code change has occurred and the requirement to be evaluated is higher, the same is more likely to occur in the requirement to be evaluated.

The risk evaluation based on a requirement described in the first embodiment allows for preparations such as reviewing the requirement at the time of requirement definition and securing software development personnel having specialized knowledge about the requirement.

### Second embodiment

Next, a second embodiment of the present invention will be described. This embodiment, in which the functional configuration in the first embodiment is changed, enables risk evaluation using past project information. Except for differences described below, each unit of a system according to the second embodiment has the same function as the unit denoted by the same reference numeral of the first embodiment illustrated in FIGS. 1 to 9, and thus will not be described.

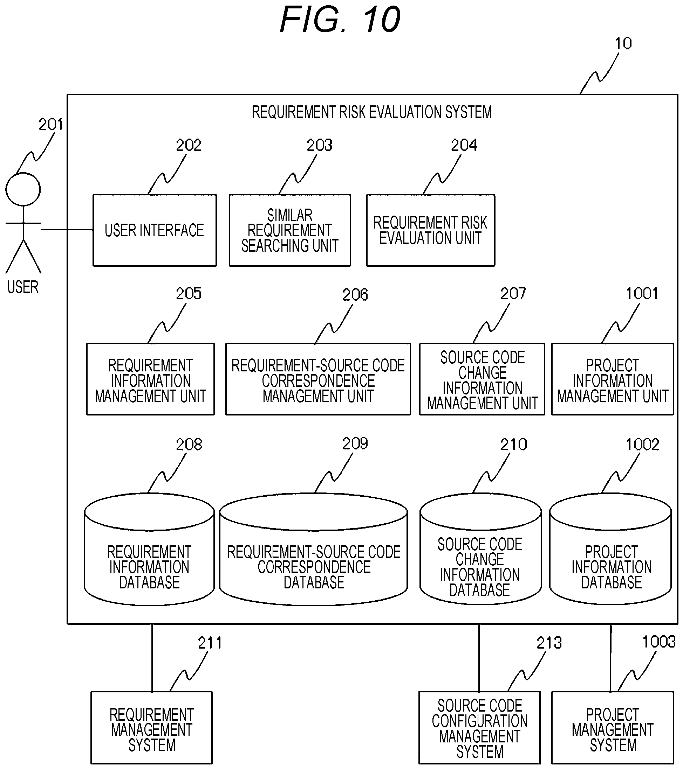

FIG. 10 is a block diagram illustrating functions of the requirement risk evaluation system according to the second embodiment of the present invention.

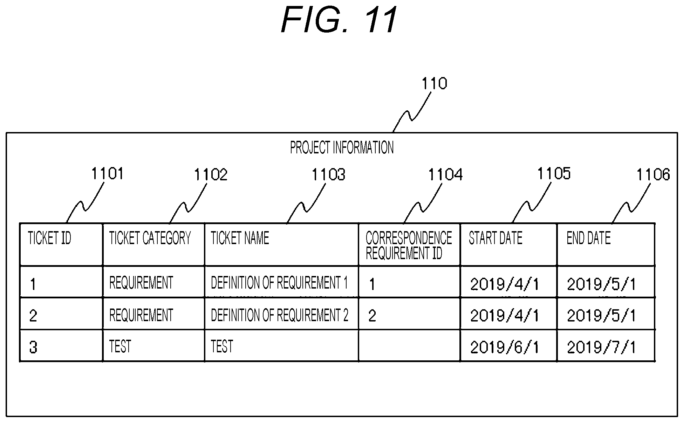

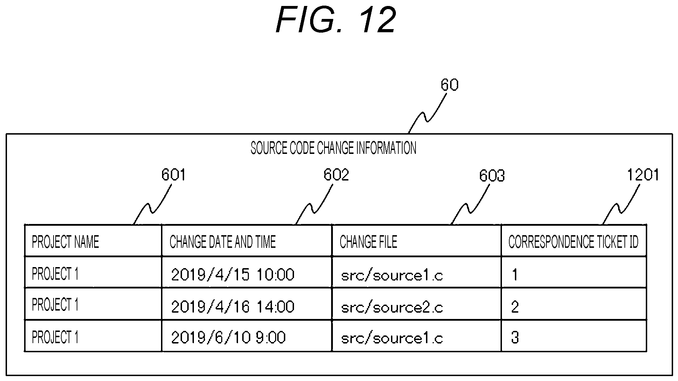

The requirement-source code correspondence management unit 206 collects source code change information from the source code change information management unit 207 and project information 110 (see FIG. 11) from a project information management unit 1001, and derives requirement-source code correspondence information 50. The derivation is performed, for example, as follows. That is, the derivation is performed using ticket ID 1101 and correspondence requirement ID 1104 of the project information 110, and correspondence ticket ID 1201 (see FIG. 12) and change file 603 of the source code change information 60. When a value of the ticket ID 1101 of the project information 110 matches a value of the correspondence ticket ID 1201 of the source code change information 60, a requirement identified by a value of the correspondence requirement ID 1104 of a corresponding piece of the project information 110 and a source code identified by a value of the change file 603 of a corresponding piece of the source code change information 60 are derived on the assumption of having a correspondence relationship.

The project information management unit 1001 collects the project information from a project management system 1003, stores the collected project information in a project information database 1002, and provides the project information to another function. The project management system 1003 is a system that manages processes, and details and execution timings of work in a project.

The project management system 1003 is connected to the requirement risk evaluation system 10.

Note that, as in the units common to the first embodiment, the function of the project information management unit 1001 is implemented by the processor 101 controlling the units of the requirement risk evaluation system 10 as necessary according to a program stored in the main storage device 102. That is, following processing executed by the project information management unit 1001 is actually executed by the processor 101. In addition, the project information database 1002 is stored in the main storage device 102 or the auxiliary storage device 103.

FIG. 11 is an explanatory diagram illustrating an example of project information held by the requirement risk evaluation system according to the second embodiment of the present invention.

The project information 110 includes the ticket ID 1101, ticket category 1102, ticket name 1103, the correspondence requirement ID 1104, start date 1105, and end date 1106. The ticket ID 1101 is an ID that uniquely identifies a piece of project information. The ticket category 1102 indicates a classification of the piece of project information. For example, REQUIREMENT would be set for information on a requirement definition, and TEST would be set for information on a test. The ticket name 1103 is a name of the piece of project information. The correspondence requirement ID 1104 is an ID that indicates which requirement the piece of project information relates to, and corresponds to the requirement ID 401 in FIG. 4. The start date 1105 and the end date 1106 represent a start date and an end date of work represented by the ticket name 1103.

FIG. 12 is an explanatory diagram illustrating an example of source code change information held by the requirement risk evaluation system according to the second embodiment of the present invention. Note that items similar to those in FIG. 6 of the first embodiment are denoted by the same reference numerals as those in FIG. 6, and are not described.

The correspondence ticket ID 1201 is an ID that indicates which piece of project information a corresponding source code change has been performed on, and corresponds to the ticket ID 1101 in FIG. 11.

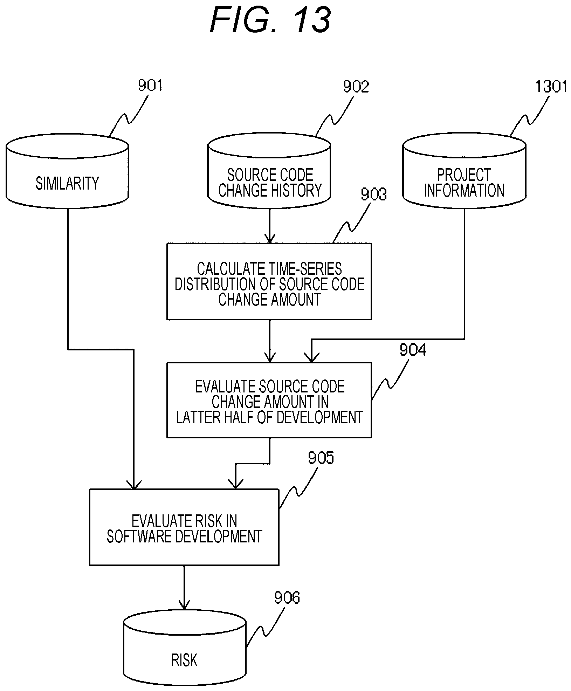

FIG. 13 is a flowchart illustrating risk evaluation processing performed by the requirement risk evaluation system according to the second embodiment of the present invention. Specifically, the flowchart indicates a data flow when the requirement risk evaluation unit 204 evaluates the risk in step 706 in FIG. 7. Note that, among the items shown in FIG. 13, items similar to those in FIG. 9 of the first embodiment are denoted by the same reference numerals as those in FIG. 9, and are not described.

In a process 904, the requirement risk evaluation unit 204 evaluates the source code change amount in the latter half of development from the time-series distribution of the source code change amount calculated in the process 903. The evaluation method includes, for example, defining a period from a start date to an end date of a test process in the project 1301 as the latter half of development, and calculating the source code change amount within the period of the latter half of development. This is based on the estimation that the source code change after the start of the test process is likely to lead to a development delay or the like.

According to the second embodiment described above, using the project information allows for specifying a change timing on a process basis and evaluating the risk in consideration of a process execution timing for each project.

The above-described embodiments of the present invention may include following examples.
(1) A risk evaluation system (for example, the requirement risk evaluation system 10) includes a processor unit (for example, the processor 101) and a storage unit (for example, at least one of the main storage device 102 and the auxiliary storage device 103). In the risk evaluation system, the storage unit stores: demand information (for example, the requirement information 30) indicating a demand for software to be developed in a software development project that is a risk evaluation target; past demand information (for example, the past requirement information 40) indicating a demand for software developed in a past software development project; and a source code change history (for example, the source code change information 60) in the past software development project, and the processor unit is configured to: calculate a similarity indicating a resemblance between the demand information and the past demand information (for example, step 703); extract a change history of a source code corresponding to the past demand information based on the past demand information and the source code change history (for example, steps 704 and 705); and evaluate a risk in software development for realizing the demand information based on the similarity and the change history of the source code corresponding to the past demand information (for example, step 706).
   As a result, it is possible to provide a risk evaluation system that evaluates a risk in satisfying a demand in a software development project.
(2) In the above item (1), the processor unit is configured to: acquire traceability information (for example, information from the traceability management system 212) that associates the demand for the software developed in the past software development project with a specification that satisfies the demand and with a source code corresponding to the specification; and extract the change history of the source code corresponding to the past demand information based on the traceability information and the source code change history.
   This configuration allows for the risk evaluation according to the present invention in a software development project in which traceability is managed.
(3) In the above item (1), the storage unit stores project information (for example, the project information 110) that associates work in the past software development project with a source code, and the processor unit is configured to extract the change history of the source code corresponding to the past demand information based on the project information and the source code change history.
   This configuration allows for the risk evaluation according to the present invention in a software development project in which project information is managed.
(4) In the above item (1), the processor unit is configured to calculate a source code change amount in a late stage of a development period of the software development project that is the risk evaluation target based on the source code change history (for example, step 904), and evaluate the risk based on the calculated source code change amount in the late stage of the development period.
   This configuration allows for accurate risk evaluation.
(5) In the above item (4) , the processor unit is configured to define a period of the development period after a lapse of a predetermined ratio of the development period as the late stage of the development period.
   This configuration allows for accurate risk evaluation.
(6) In the above item (4) , the storage unit stores project information that associates work in the past software development project with a source code, and the processor unit is configured to specify a period in which a test of the software has been performed in the past software development project based on the project information, and define the period in which the test has been performed as the late stage of the development period.
   This configuration allows for accurate risk evaluation.
(7) In the above item (4) , the processor unit is configured to evaluate the risk such that the risk becomes higher as the similarity between the demand for the software to be developed in the software development project that is the risk evaluation target and the demand for the software developed in the past software development project is higher, and as the source code change amount in the late stage of the development period is larger, a source code of the source code change amount corresponding to the demand for the software developed in the past software development project.

This configuration allows for accurate risk evaluation.

The present invention is not limited to the above-described embodiments, and may include various modifications. For example, the above-described embodiment has been described in detail for better understanding of the present invention, and all the described constituent elements are not necessarily included. In addition, some of constituent elements of a certain embodiment can be replaced with a constituent element of another embodiment. Furthermore, a constituent element of a certain embodiment can be added to a constituent element of another embodiment. In addition, some of constituent elements of each embodiment can be subject to addition of another constituent element, deletion, and replacement.

Some or all of the above-described constituent elements, functions, processing units, processing means, and the like may be provided in the form of hardware by, for example, designing integrated circuits. The above-described constituent elements, functions, and the like may be provided in the form of software by a processor interpreting and executing programs for implementing the functions. Information such as programs, tables, and files for implementing the functions may be stored in a storage device such as a nonvolatile semiconductor memory, a hard disk drive, and a solid state drive (SSD), or a computer-readable non-transitory data storage medium such as an IC card, an SD card, and a DVD.

In addition, the illustrated control lines and information lines are considered to be necessary for the description. Not all control lines and information lines on the product are illustrated. In practice, it may be considered that almost all the constituent elements are connected to each other.

## Claims

1. A risk evaluation system comprising:
a processor unit; and
a storage unit,
wherein the storage unit stores:
demand information indicating a demand for software to be developed in a software development project that is a risk evaluation target;
past demand information indicating a demand for software developed in a past software development project; and
a source code change history in the past software development project, and
the processor unit is configured to:
calculate a similarity indicating a resemblance between the demand information and the past demand information;
extract a change history of a source code corresponding to the past demand information based on the past demand information and the source code change history; and
evaluate a risk in software development for realizing the demand information based on the similarity and the change history of the source code corresponding to the past demand information.

2. The risk evaluation system according to claim 1, wherein
the processor unit is configured to:
acquire traceability information that associates the demand for the software developed in the past software development project with a specification that satisfies the demand and with a source code corresponding to the specification; and
extract the change history of the source code corresponding to the past demand information based on the traceability information and the source code change history.

3. The risk evaluation system according to claim 1, wherein
the storage unit stores project information that associates work in the past software development project with a source code, and
the processor unit is configured to extract the change history of the source code corresponding to the past demand information based on the project information and the source code change history.

4. The risk evaluation system according to claim 1, wherein
the processor unit is configured to calculate a source code change amount in a late stage of a development period of the software development project that is the risk evaluation target based on the source code change history, and evaluate the risk based on the calculated source code change amount in the late stage of the development period.

5. The risk evaluation system according to claim 4, wherein
the processor unit is configured to define a period of the development period after a lapse of a predetermined ratio of the development period as the late stage of the development period.

6. The risk evaluation system according to claim 4, wherein
the storage unit stores project information that associates work in the past software development project with a source code, and
the processor unit is configured to specify a period in which a test of the software has been performed in the past software development project based on the project information, and define the period in which the test has been performed as the late stage of the development period.

7. The risk evaluation system according to claim 4, wherein
the processor unit is configured to evaluate the risk such that the risk becomes higher as the similarity between the demand for the software to be developed in the software development project that is the risk evaluation target and the demand for the software developed in the past software development project is higher, and as the source code change amount in the late stage of the development period is larger, a source code of the source code change amount corresponding to the demand for the software developed in the past software development project.

8. A risk evaluation method executed by a risk evaluation system including a processor unit and a storage unit, wherein
the storage unit stores:
demand information indicating a demand for software to be developed in a software development project that is a risk evaluation target;
past demand information indicating a demand for software developed in a past software development project; and
a source code change history in the past software development project,
the risk evaluation method comprising:
a first procedure, in the processor unit, of calculating a similarity indicating a resemblance between the demand information and the past demand information;
a second procedure, in the processor unit, of extracting a change history of a source code corresponding to the past demand information based on the past demand information and the source code change history; and
a third procedure, in the processor unit, of evaluating a risk in software development for realizing the demand information based on the similarity and the change history of the source code corresponding to the past demand information.

9. The risk evaluation method according to claim 8, wherein
in the second procedure, the processor unit acquires traceability information that associates the demand for the software developed in the past software development project with a specification that satisfies the demand and with a source code corresponding to the specification, and the processor unit extracts the change history of the source code corresponding to the past demand information based on the traceability information and the source code change history.

10. The risk evaluation method according to claim 8, wherein
the storage unit stores project information that associates work in the past software development project with a source code, and
in the second procedure, the processor unit extracts the change history of the source code corresponding to the past demand information based on the project information and the source code change history.

11. The risk evaluation method according to claim 8, wherein
in the third procedure, the processor unit calculates a source code change amount in a late stage of a development period of the software development project that is the risk evaluation target based on the source code change history, and the processor unit evaluates the risk based on the calculated source code change amount in the late stage of the development period.

12. The risk evaluation method according to claim 11, wherein
in the third procedure, the processor unit defines a period of the development period after a lapse of a predetermined ratio of the development period as the late stage of the development period.

13. The risk evaluation method according to claim 11, wherein
the storage unit stores project information that associates work in the past software development project with a source code, and
in the third procedure, the processor unit specifies a period in which a test of the software has been performed in the past software development project based on the project information, and the processor unit defines the period in which the test has been performed as the late stage of the development period.

14. The risk evaluation method according to claim 11, wherein
in the third procedure, the processor unit evaluates the risk such that the risk becomes higher as the similarity between the demand for the software to be developed in the software development project that is the risk evaluation target and the demand for the software developed in the past software development project is higher, and as the source code change amount in the late stage of the development period is larger, a source code of the source code change amount corresponding to the demand for the software developed in the past software development project.
